Europäisches Patentamt

European Patent Office

Office européen des brevets

(19)

(11) **EP 1 385 094 A1**

(12) **EUROPEAN PATENT APPLICATION**

(43) Date of publication:
**28.01.2004 Bulletin 2004/05**

(51) Int Cl.⁷: **G06F 17/10**, G06F 17/18, H04L 12/24

(21) Application number: **02078027.6**

(22) Date of filing: **24.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **Koninklijke KPN N.V.**<br>**9726 AE Groningen (NL)**<br><br>(72) Inventors:<br>• **Gijsen, Bart Michel Magdalena**<br>**2587 RB The Hague (NL)** | • **Van der Mei, Robbert Douwe**<br>**1066 HR Amsterdam (NL)**<br>• **Blom, Marcus Anthonius**<br>**2273 VS Voorburg (NL)**<br><br>(74) Representative: **Prins, Adrianus Willem**<br>**Vereenigde,**<br>**Nieuwe Parklaan 97**<br>**2587 BN Den Haag (NL)** |

(54) **Apparatus and method predicting performance of distributed systems**

(57)    The present invention describes an apparatus and method for predicting performance of a distributed system, such as an ICT network. The apparatus comprises a processor and a memory for storing an executive program allowing said processor to perform said predicting. The executive program comprises a model builder for modelling the distributed system. The model builder uses a mathematical model with a multi-layer structure in which an application layer is described by transaction graph formalisms and a logical resource layer and a physical resource layer are described by queuing network formalisms. In this way the capabilities (and advantages) of both formalisms are combined in one model. Therefore the apparatus is capable of producing very accurate performance predictions of existing systems but can also be used to optimise distributed systems during the design process.

*FIG. 3*

EP 1 385 094 A1

**Description**

**Field of the invention**

The present invention relates to an apparatus for predicting performance of a distributed system. The present invention also relates to quantitative modelling and prediction of performance of distributed applications and ICT systems.

**Background**

The explosive growth of the Internet, the increasing popularity of PCs and the advances in high-speed networking have boosted the emergence of Information and Communication Technology (ICT), which has become an integrated part of our modern society. ICT systems enable applications to be divided in components that can communicate and be executed on separate geographically distributed computer systems. This division is commonly referred to as distributed computing. In the competitive market of telecommunications industry it is becoming increasingly important to be able to deliver a high and guaranteed Quality of Service (QoS) level to the customers in a cost-effective manner. In this context, an important source of income for network operators may be the so-called third party provisioning (3PSP) service, where (external) service providers make use of the operators' ICT infrastructure to deliver services to their customers. For the success of 3PSP services, the ability to deliver guaranteed QoS levels at specified levels and negotiate Service Levels Agreements (SLAs) are crucial. Consequently, the ability to deliver QoS differentiation, with specified and guaranteed QoS levels, will strongly enhance the competitive edge of a service provider.

The end-to-end performance of services offered over distributed system architectures is a highly complex interplay between many components, such as the specifics of the hardware, software, operating systems, middleware architecture, network architecture, object models, threading models, system load, amongst many others. To assess the performance of distributed services many testing and tuning efforts have been initiated in many companies and research institutes. Testing and tuning are essential to provide an understanding of the performance capabilities and limitations of test scenarios.

However, there are a number of significant drawbacks to performance testing and tuning only. First, testing efforts are extremely time consuming in practice. Second, the results of a set of performance under given traffic scenarios are usually hard to extrapolate to different traffic scenarios. Third, testing experiments are usually not permitted to be executed in the production environment, whereas test lab environments are different from the production environment. Consequently, the validity of test lab results in production is at least questionable. These observations raise the need to develop, analyse and validate quantitative performance models that capture the relevant factors/components that affect the end-to-end performance observed by the end user. Performance models may be extremely useful for system architects and system engineers to:

- evaluate the performance of services under different system design alternatives prior to their actual creation, to support architectural decisions;
- timely anticipate on performance problems in case of projected growth of traffic volumes, and to identify performance bottlenecks;
- predict the performance impact of the addition of new services to the existing ICT infrastructure, and to predict the performance of existing services when new services are added to the existing ICT infrastructure.

These features can be regarded as general performance analysis requirements. Typically these requirements are met by (almost) any model based performance analysis approach, while they are typically not met by the testing and tuning approach. Focussing more on requirements specific for model based performance analysis approaches, one can say that the challenge of modelling the performance of distributed systems is to develop a modelling concept that:

a. is flexible enough to capture all (potentially) relevant performance aspects, such as:

- logical & physical resource contention,
- multi-resource possession and
- state-dependent behaviour

b. does not impose strong restrictions on required model input data, by enabling modelling of foreground and background applications in the distributed system model specification based on partial information
c. enables computation of a range of performance statistics, such as: response time, throughput and availability metrics and average values and variability statistics (e.g. variance, percentiles) for each of those metrics.

In the field of performance analysing of ICT platforms, several alternative software tools are known. First of all there are a large number of performance monitoring tools, such as Patrol®. Performance monitoring and management tools focus on real-time performance management of operational ICT platforms. As such, these tools are per definition reactive (i.e. responding to for example failures, or large response time events), and are not able to do performance predictions. Although performance predictions could also be made by extrapolation of monitoring data from the past towards the future, the accuracy of such predictions will typically be worse than predictions made by a model-based performance prediction tool.

Several model-based methodologies can be found in literature. Examples of existing model-based methodologies are: queuing networks, 'state transition based' performance analysis (e.g. stochastic extensions of Petri nets, process algebras and activity networks) and software performance engineering. Based on these model-based methodologies several software tools for conducting performance analysis exist. Examples of queuing network and state transition based software tools are: SHARPE, UltraSAN, HIMAP, JAGATH, Möbius, PEPA Workbench, Tangram II, TIPPtool, TwoTowers, HITT and XABA. All of these tools stem from the academic world, coming from expertise fields such as process algebra's, stochastic Petri networks, stochastic activity networks and queuing theory. A major drawback of all these tools results from the fact that mathematical theories are used which are too restricted to capture all potentially relevant aspects in ICT performance. For example, the process algebra, stochastic Petri net and activity network theory can be applied for analysing the (dynamic) behaviour of systems, that may include multi-resource possession. However, these theories are not applicable for analysing systems where 'jobs' are contending for resources. Queuing theory is particularly useful for analysing systems with contending jobs, but not applicable for analysing systems where jobs require possession of multiple resources at the same time.

Queuing theory used to model and predict performance of distributed systems has been described in American patent publication US 5.881.268. In this publication a performance modelling tool is described permitting a user to enter a definition of a distributed system, and run simulations in order to calculate performance metrics. The tool can automatically transform a performance analysis model, such as the Method of LayersRolia and Sevcik, "The method of layers", IEEE Trans. Software Engineering, Vol. 21, pp. 689-699, 1995, into a tool for comparing various design alternatives. In the Method of Layers approach, estimates of performance for queuing in a closed network, average number of visits for individual software process types and scheduling disciplines are used as input for Layered Queuing Models (LQMs) of the components of a distributed system. The Method of Layers divides an LQM into two complementary models, one for software and one for devices, and combines the results to provide performance estimates for the system under study. LQMs require average values, for example average number of visits, as process input parameters. With LQMs it is possible to calculate the average response times of a certain system. However, it is not possible to calculate a response time for individual events, and therefore it will not be possible to calculate the variability in response times in such a queuing model. Software engineering research has resulted in software design languages such as UML (Unified Modeling Language). Languages such as UML are being extended with performance annotations to provide an opportunity to 'automatically' generate performance models from a UML specified system. Several methods are proposed for translating UML diagrams into execution graphs and extended queuing network models that can be evaluated. Most contributions regarding UML performance annotations are restricted to performance modelling and use only primitive performance evaluation techniques, or refer to other work for evaluating performance models.

It is an object of the present invention to provide a performance modelling and prediction tool that takes into account logical and physical resource contention as well as multi-resource possession in a distributed system.

## Summary of the invention

Therefore in one aspect of the invention an apparatus for predicting performance of a distributed system is disclosed, said apparatus comprising:

-    an input module for receiving input of said distributed system, said input including at least a description of application processes;
-    a model builder for receiving said input from said input module, said model builder being arranged to translate said input into a layered mathematical model of said distributed system;
-    an output module.

In an embodiment of the invention said apparatus comprises a performance calculation module, said performance calculation module being arranged to calculate performance metrics for said distributed system using said layered mathematical model.

In an embodiment of the invention the layered mathematical model comprises an application layer, a logical resource layer and a physical resource layer.

In an embodiment of the invention processes at application level are modelled by state-dependent transaction graph formalism, derived from Petri Net formalisms, while the lower level processes are modelled by Queuing networks. So in this hybrid mathematical model, sequential and parallel high level actions are modelled by a formalism very suitable for these actions, and the lower level queuing processes are modelled by a formalism best suited for these processes. By combining (state-dependent) transaction graph and queuing network formalisms via correlated model layers, the modelling capabilities of the invention supercede the modelling capabilities of both transaction graph and queuing network formalisms. As a result very accurate performance predictions of existing distributed systems can be derived.

In an embodiment the physical resource layer of said multi-layered mathematical model comprises an effective resource utility formula for specifying consumption of physical resources caused by a request, said formula comprising the following parameters:

- type of said request;
- tasks for dealing with said request;
- logical resources used for executing said tasks,

wherein said parameters have volumes that are either available from or can be derived from experiments.

Effective Resource Utilisation concept enables incorporation of performance measurements into the performance model and analysis. As such it enables the combination of a model-based and an empirical (by means of experimenting) performance evaluation method.

The invention also relates to a use of the analysing apparatus mentioned above, for analysing performance of a cash withdraw system.

Furthermore the present invention relates to a method for predicting performance of a distributed system comprising the steps of:

- receiving information on said distributed system, said input including at least a description of application processes;
- defining processing levels for said distributed system;
- converting said information into a layered mathematical model;

wherein said method also comprises the steps of:

- using transaction graphs for representing one layer of said layered mathematical model, said transaction graphs specifying at least one of sequential and parallel actions to be completed in order to deal with a request for an application process;
- using queues for for representing other layers of said multi-layered mathematical model.

Moreover, the present invention relates to computer program product to be loaded by a computer, said computer program providing said computer with the capacity to perform the steps of:

- receiving information on said distributed system, said input including at least a description of application processes;
- defining processing levels for said distributed system;
- converting said information into a layered mathematical model;

wherein said method also comprises the steps of:

- using transaction graphs for representing one layer of said layered mathematical model, said transaction graphs specifying at least one of sequential and parallel actions to be completed in order to deal with a request for an application process;
- using queues for for representing other layers of said multi-layered mathematical model.

Finally the invention relates to a data carrier provided with a computer program product as described above.

**Brief description of the drawings**

Below, the invention will be explained with reference to some drawings, which are intended for illustration purposes only and not to limit the scope of protection as defined in the accompanying claims.

Fig. 1 shows a sequence of screens during a cash withdraw transaction.

Fig. 2 shows a transaction graph of tasks to be executed during an ATM transaction.

Fig. 3 shows part of the transaction graph of figure 2 and the required logical resources for each of the cash dispenser tasks and task-interactions.

Fig. 4 illustrates the cash dispenser example of figure 1, modelled at logical and physical resource level, including the mapping from logical to physical resource level.

Fig. 5-7 schematically show the modules of the executive program of different embodiments of the invention.

Fig. 8 shows a schematic block diagram of an analysing apparatus of the present invention.

## Description of preferred embodiments

The present invention can be used for transaction-based distributed applications: a mouse-click by a user of a terminal in a distributed application initiates a 'flow of actions' that ends when requested information pops up on the users screen. The dynamic behaviour of such distributed applications is described by the flow of sequential and/or parallel actions that have to be completed for an application request. Each of these actions require one or more logical and physical resources to execute the action. Since these logical and physical resources are typically used for supporting several applications, the request scheduling disciplines of the resources determine the dynamic behaviour of a set of applications that are competing for resources. In short, modelling the dynamic behaviour of a distributed application over a distributed ICT system essentially involves specification of the following behaviour aspects:

1. which sequential and/or parallel flow of actions has to be completed for an application request?

2. which logical and physical resources are required for execution of the actions?

3. how are concurrent actions simultaneously executed by each resource? The modelling approach proposed in this invention is aimed at specifying these three behaviour aspects for a distributed platform under consideration.

The development and management of applications over distributed ICT systems involve several expertise fields, such as application software design, communication technology and database and computer hardware. At each of these expertise fields different performance issues play a role. Locking and resource sharing are important regarding hardware, synchronous or asynchronous communication is a major communication technology performance issue while application design determines the subsequent and parallel paths of a transaction graph and resource requirements.

A clear separation of these fields enhances the overview over and the communication about a distributed ICT performance model. For this reason the proposed approach is to model ICT systems at three, coherent and correlated model levels:

- application level, describing the transaction flows for handling a request;
- logical resource level, denoting the (software) functionality, including communication software, and 'permission' required to execute application level actions;
- physical resource level, describing the operation of the hardware (physical resources) that executes the logical resource functionality.

Note the relations between the model levels; the application level behaviour is worked out in more detail at the next levels which 'explain' the performance experienced at application level. It should be mentioned here that within each level several sub-levels could be distinguished, if this appears to be convenient when modelling a specific ICT system. Sub-models can, for example, be convenient for purpose of abstraction from details, or for enabling a stepwise refinement modelling approach in order to balance the model detail level and the required model accuracy.

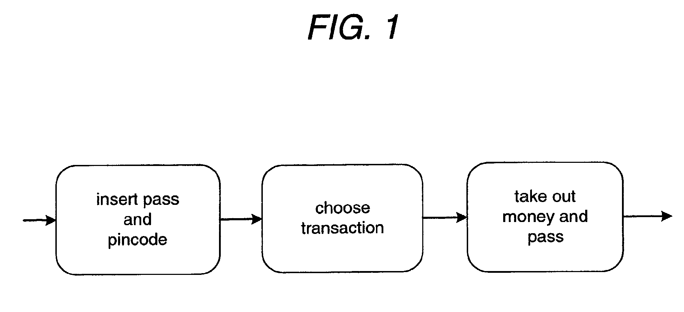

In the following, each of the three performance model levels will be described in more detail with the help of a simple cash-dispenser (or Automatic Teller Machine, ATM) example. Customers arriving at an ATM insert their creditcard and type in a pin-code. Then the customer chooses the transaction service that he wants to perform (e.g. a cash withdraw or a checking to savings transfer). After that, the cash dispenser system executes the requested transaction, for example by performing the necessary validations and dispensing money in case of a cash withdraw transaction. Figure 1 illustrates this procedure by presenting the subsequent screens that the customer will see during execution of the procedure. Of course, from an ATM point of view this procedure is repetitive (after displaying the 'take out money' screen it will return to the 'insert pass' screen), but the customer will experience the three screens only. This illustrates our view on performance modelling, which is aimed at user perceived performance.

Application Level

The dynamic behaviour of distributed applications can be represented by transaction graphs (or flow charts) that specify the sequential and/or parallel actions that have to be completed in order to deal with a request for an application. At this level applications are described in isolation.

The model entities at application level are requests, tasks and task-interactions. Requests trigger a transaction, whose execution is described by a transaction graph. The transaction graphs describe the sequential and parallel tasks that are executed. At application level the task-interactions are simply the arcs between the tasks in the transaction graphs, so transaction graphs are constructed from tasks and task-interactions.

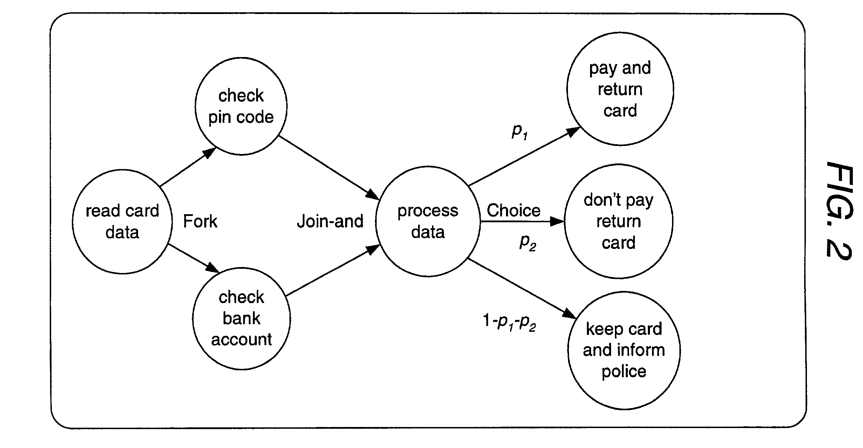

These model entities are illustrated with the cash dispenser example, by zooming in on the transactions that the system performs between the screens 'choose transaction' and 'take out money'. Once the customer has inserted his card, typed in the pin-code, has chosen the transaction service and pushes the start-button, then the ATM starts processing the transaction depicted in figure 2. After reading data from the credit-card, the pin-code verification (is the card reported as stolen?) and bank account validation (does customer have sufficient funds?) are performed concurrently. The results of these checks are processed and if both checks are ok (which occurs for fraction $0 \leq p_1 \leq 1$ of the requests; $p_1$ being the fraction of both positive pin-code verification and bank account validation), then the customer is paid and the credit-card is returned. Figure 2 also denotes what happens when either the pin-code or the bank account check is not ok. If one of the checks is not ok and the card is not reported stolen (which occurs for fraction $0 \leq P_2 \leq 1$), then the credit-card is returned but the customer is not paid. If, during pin-code verification, it shows that the card is reported stolen, then the card is not returned and the police is informed, (fraction of occurrence is $1 - p_1 - p_2$). Each of the three application level entities are assigned attributes. These attributes represent concrete information about the modelled system that has to be provided by the user. The attributes for requests are a *request-type* and a *sequence number.* Distinguishing requests based on a type enables the identification of request classes, which can for example be used for modelling any ATM-request that must be withdrawn (these ATM-requests will follow a transaction path that is different from the path for an ATM-request which result in payment).

Besides an identifier/name (e.g. 'read card data') the attributes of a task are input and output ports (the intersections between a task and a task-interaction) and routing rules between the task input and output ports. The input and output ports are not explicitly drawn in Figure 2, but one of the input ports is at the intersection of task 'check pin code' and the arc-point from task 'read card data'. The intersection of the originating point of that arc and the task 'read card data' is an output port of the 'read card data' task. During a transaction, the requests are moving from task output ports to input ports of other tasks, via connecting arcs. The routing rules specify for each combination of task and request-type how the requests move from task input port(s) towards task output port(s). In particular, the routing rules specify conditions under which requests arriving at the input ports may move to zero, one or more output ports. A request that is routed to more than one output port represents a request-*fork* construct: after the present task, several parallel tasks will be performed as next actions for the request. The fork construct is illustrated at the output ports of the 'read card data' task, see figure 2 Besides a fork construct, the output specification can also be a *choice* from several output ports (see output ports of 'process data') or zero output ports. An output specification of zero ports represents the *termination* of a request.

In order to be able to model *a join-and* construct, the input condition may specify that a particular request (of some request-type and sequence number that has been forked previously) must have arrived at two input ports. For example, the task 'process data' can only be executed if both the 'check pin code' and 'check bank account' results are available. Similarly, it is possible to model *a join-or* construct: in this case the first instance of a forked request, arriving at a task, will be forwarded to the output side, while all subsequent arrivals of the same request will be terminated.

Finally, the attributes of the task-interactions are simply the preceding task and its output port and the successor task and its input port (besides an identifier/name, which is omitted in figure 2).

In Table 1 the model entities and their attributes that specify an application level model are summarised.

Table 1:

| application level model entities and attributes | |
| --- | --- |
| *Application level entities* | *Application level attributes* |
| Request | Type |
| | Sequence Number |

Table 1: (continued)

| application level model entities and attributes | |
| --- | --- |
| **Application level entities** | **Application level attributes** |
| Task | Identifier / name |
| | Input & output ports |
| | Input => output port routing rule:<br>•input conditions: single, join-and, join-or<br>•output spec: none, single, fork, choice |
| Task interaction | Identifier / name |
| | Preceding task and output port |
| | Successor task and input port |

Request arrival rates are typically determined by the use of applications by users, which cannot be deduced from a (static) description of an application. For this reason the model input regarding request arrivals is separated from the application level entities and attributes. Internal and external requests are distinguished: external requests represent request arriving during the period of the operational application, while internal requests are present at the beginning of the applications period. Typically, external requests are specified by request inter-arrival times, but in the context of distributed applications one may also specify more complex arrival processes. For example, the request arrival process for applications that require authentication will show correlated subsequent requests: a login request will always precede further transactions. Further, requests initiated by web-browsing users may depend on, for example, experienced response times. As mentioned previously, user behaviour is out of the invention's scope and the invention is initially restricted to a basic request arrival process that only requires specification of request inter-arrival times.

A formal specification of an application level model involves definition of sets and definitions of mappings between these sets. For example, the set of requests could be defined as a Cartesian product of a set of 'request-types' and the set of non-negative integer numbers. The task-interaction attributes 'preceding task output port' and 'successor task input port' can be defined by a mapping that specifies the corresponding input and output port for each of the task-interactions. Once the required sets and mapping are defined, an unambiguous mathematical model is specified. In annex 1 the formalisation of the application level is described.

These application level entities and their attributes are 'static' information that has to be provided by the user. Below, a description follows of how this static information, together with the notion of *state* and *state transition rules* determines the dynamic behaviour of the modelled system. At application level the notion of state and state transition is closely related to Petri Nets, see Ajmone Marsan, Balbo, Conte, "A Class of Generalized Stochastic Petri Nets for the Performance Analysis of Multiprocessor Systems", ACM Transactions on Computer Systems, Vol.2 No.2, pp. 93-122, Maggio 1984. In fact, the requests can be seen as 'tokens' that visit consecutive 'places', which are the input and output ports of the tasks. The state of the system is specified as the set of all combinations of requests 'present' at some task input and output ports.

When tasks are being performed for requests, the requests 'move on' to the next task(s). Moving requests change the state, since the state is a 'snapshot' of requests at task input- and output ports. How requests can move on is subject to the following state transition rules. Request arrivals at input port(s) enable a task if and only if the request arrivals satisfy the input condition, as specified by the task routing rule attribute. If a task is enabled, then it may serve the requests arrived at its input ports. If the task actually serves the request, then the state changes by subtracting the requests at the input ports) and adding that request at the task output port(s), according to the output port specification in the routing rule. Similarly, a request arrival at an output port can trigger a task-interaction transfer. If a request is transferred by a task-interaction, then the state changes by subtracting the request at the output port and adding it to the task input port according to the task-interaction's preceding and successor port attributes. For example, the state of the cash dispenser at some point in time can be a (forked) request at the output port of task 'check pin code' and at the (lower) input port of 'process data'. In this state the only enabled task-interaction (no tasks are enabled) is the arc between 'check pin code' and 'process data'. When this task-interaction fires, the next state is specified by a request at both input ports of 'process data'. In that state task 'process data' is enabled, etc.

It is possible that in a certain state, more than one task or task-interaction is enabled. As a result, the information in the model at application level is not sufficient to determine the order in which requests will traverse the task (-interaction)s. Part of this non-determinism will become deterministic once the notion of service and transfer time is introduced. In the modelling proposed here, the notion of service and transfer time is determined at the other model levels.

Logical Resource Level

The tasks and task-interactions described at application level are executed by a (software and hardware) platform which supports the functionality required by the task(-interaction)s. Besides required functionality, task(-interaction)s may require 'permission' to use functionality; think of mutual exclusions algorithms that prohibit access to critical memory sections or to shared mutex-code in case the section or code is being used. The functionality and 'permissions' required for task(interaction) execution will be called the *logical resources.* Some examples of logical resources are:

- (software) functionality required for validation of the bank account balance for a customer;
- application and operating system threads, whose possession is required for processing of software;
- locks that permit the unique use of a critical memory section; for example, a bank account balance will be briefly locked when it is updated (a write operation) in order to prevent data corruption due to possible simultaneous updates.

From a performance point of view, it is important to note that tasks and task-interactions from one or more applications may be contending for logical resources. As a result, logical resources can be scarce resources and queuing may occur for the use of logical resources. Further, it is possible that execution of a task(-interaction) requires the use of more than one logical resource, for example a task requiring both a thread of execution and a lock on a critical section. Therefore, at logical resource level, preferably queuing network formalisms are used, extended with the notion of multi-resource possession.

Since it is hardly possible to present a complete list of such logical resources, a categorisation of logical resources in several 'types' is not useful. Only the specification of a single set of logical resources is used here. It is up to the user to specify the set and the logical resource attributes.

At logical resource level, information about the logical resources is added to the application level information. For each of the application level entities, the user should specify which logical resources are required to execute it. Further, for each logical resource the maximum 'level of concurrency' needs to be specified, which specifies the maximum number of task(-interaction)s that can simultaneously use the logical resource. For example, for a multi-threaded object the number of threads denotes the maximum 'level of concurrency' and for a lock on a critical section the maximum 'level of concurrency' equals 1.

In some cases logical resources are not immediately released after execution of a task(-interaction). For example, in case of a synchronous client-server call the client-application can be blocked until the call-response has returned at the client. During the call no other applications can use the blocked client-application (thread), which can lead to logical resource level queuing. Therefore, at logical resource level not only the required resources for execution of a task(-interaction) need to be specified, but also the resources that are released after execution of a task(-interaction) need to be specified.

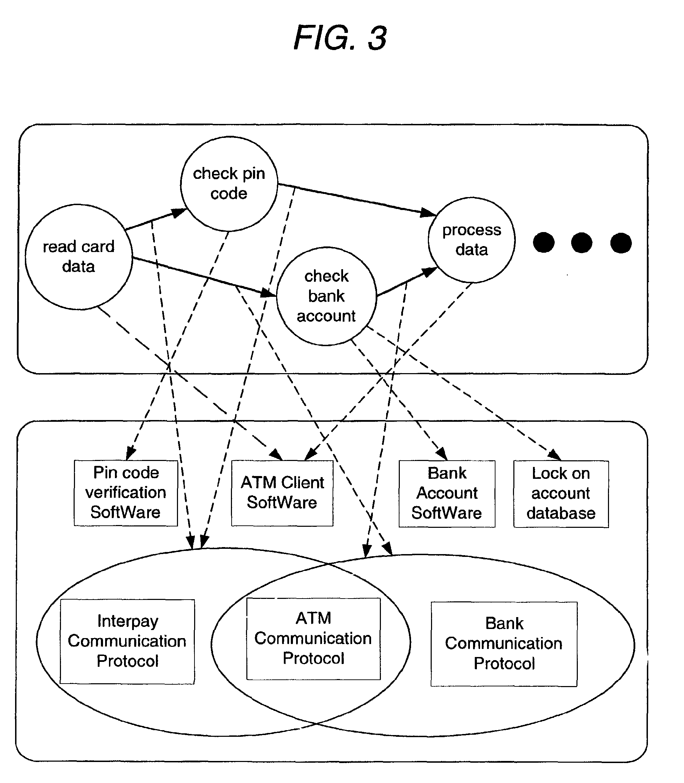

Figure 3 shows (part of) a single pin-transaction. In this figure, two levels of a distributed system are modelled. At the application level, a part of the task and task interactions of figure 2 are shown. At the (lower) logical resource level, several relevant logical resources are shown, such as pin-code verification software, ATM client software, Bank account software, a Lock on account database. Furthermore, three communication protocol functionality's are shown, i.e. an Interpay communication protocol, an ATM communication protocol and a Bank communication protocol. (remark: 'Interpay' is a Dutch financial institution handling credit-card transactions for several banks). In figure 3 the dashed arrows indicate the required logical resources for each of the cash dispenser tasks and task-interactions. Note that tasks (e.g. "check bank account") and task-interactions may require the possession of more than one logical resource in order to execute. Further, figure 3 shows that the execution of task(-interaction)s is not only related to 'handling the request', but also requires 'overhead' such as formatting of data (marshalling), invocation of objects, transmission overhead, etc. Typically, task-interactions involve a sequence of steps, where each step requires specific logical resources. For example, the task-interaction between "read card data" and "check bank account" requires communication protocol functionality at the local ATM first and then it requires communication protocol functionality at the bank, as illustrated in figure 3. Possibly the execution of tasks also consists of a sequence of (sub-)tasks. For accurately modelling such sequences of execution steps, one should specify the order in which a task(-interaction) requires possession of logical resources. In the modelling approach of the present invention the fact that logical resources may be required in a specific order is disregarded. The specification of a sequence of subsequently required logical resources is regarded as an extension of the basic modelling approach. Where necessary a user (i.e. model designer) could always split a combination of task and task-interactions in a more detailed sequence of tasks and task-interactions.

Typically, pin-transactions from many cash dispensers are executed simultaneously, which can lead to contention of logical resources. For example, a pin-transaction may have to wait for the "lock on bank account database" to be released by another pin-transaction. When specifying the logical resource model it is important to include all information relevant for contention. This information can be included by explicitly modelling all potentially contending applications, or by specifying availability of the logical resource by subtraction of'busy periods' due to background applications from the resource's total capacity. The first option will lead to more accurate modelling, while the second option is more realistic in the sense that it is virtually impossible to specify all 'potentially contending applications', in many practical cases. In order to have the option to specify (stochastic) availability, a resource availability attribute can optionally be specified for each logical resource.

In Table 2 the extensions to a model at logical resource level are summarised, in addition to the application level entities and attributes (the application level entities and attributes are grey-shaded).

Table 2:

| logical resource level model entities and attributes | | |
|---|---|---|
| *Logical resource level entities* | *Application level attributes* | *Logical resource level attributes* |
| Logical resource | | Identifier / name |
| | | Maximum 'level of concurrency' |
| | | *Optional:* Resource availability |
| *Application level entities* | *Application level attributes* | *Logical resource level attributes* |
| Request | Type | *Optional:* priority of request |
| | Sequence Number | |
| Task | Identifier / name | Logical resource(s) required for execution of request@task |
| | Input & output ports | |
| | Input => output port routing rule: •input conditions: single, join-and / -or •output spec: none, single, fork, choice | Logical resource(s) released after execution of request@task |
| Task interaction | Identifier / name | Logical resource(s) required for execution of task-interaction |
| | Preceding task and output port | |
| | Successor task and input port | Logical resource(s) released after execution of task-interaction |
| Note, that attributes "Logical resource(s) required for execution of request@task" and "Logical resource(s) released after execution of request@task" are not task attributes, nor request attributes, but attributes of combinations of requests arrived at a task. | | |

The dynamic behaviour at logical resource level is also a more detailed extension of the behaviour at application level. For example, the dynamic state at application level is represented by the set of all combinations of requests 'present' at some task input and output ports. At logical resource level the notion of state is extended with the logical resource 'threads' that a request has acquired at the logical resources that it requires for execution of its next task.

The state transition rules at logical resource level are extended as follows. From the application level the notion of an *enabled* task is used: request arrivals at input port(s) *enable* a task if and only if they satisfy the input condition specified by the task routing rule attribute. Additional to being enabled, the task and request have to acquire the required logical resource thread(s), before a task can serve a request at logical resource level. Once a task is enabled the task and request *contend* for the logical resource thread(s), as specified by the logical-resource-required attribute. If a task is enabled and the task and request hold the required threads (as specified by the logical-resource-required attribute), then the task may *serve* the requests arrived at its input ports. If the task actually serves the request, then the state changes by subtracting the requests at the input port(s) and adding that request at the task output port (s), according to the output port specification in the routing rule. In addition, the task and request will release the threads as specified by the logical-resource- release attribute, after execution of the task.

Similarly, a request arrival at an output port can *trigger* a task-interaction *transfer.* Once a task-interaction transfer is triggered, then the task-interaction and request will *contend* for logical resource thread(s), as specified by the logical-resource-required attribute. Once all required threads are acquired, then the request can be *transferred* by the task-interaction. If a request is transferred by a task-interaction, then the state changes by subtracting the request at the output port and adding it to the task input port according to the task-interaction's preceding and successor port attributes. Further, after transfer of a request the threads that were held by the task-interaction and request are released, according to the logical-resource- release attribute.

In the dynamic state transition rules it is not explicitly specified how the threads are assigned to contending task(-interaction)s and requests. By default, the model can assume a First-Come-First-Serve (FCFS) thread assignment policy, in such a way that the specified maximum 'level of concurrency' is never exceeded (i.e. the number of threads assigned equals at most the maximum 'level of concurrency'). The FCFS policy can be extended by taking the 'priority of request' attributes (optionally specified for requests) into account. In Annex 1, a formalisation of the logical resource level is listed. The formalisation at logical resource level is an *extension* of the formalism at application level, in the sense that it completely includes the application level formalism.

Physical resource Level

The physical resource level contains the performance information regarding physical resources of the modelled system, such as databases and host-computers. Typically, the physical resources determine how long it takes logical resources to execute tasks for requests and how many can be executed within a certain time unit (throughput). Logical resources will be contending for the use of physical resources. This is why at the physical resource level, preferably queuing network formalism is used to model the processes. Regarding physical resources one can distinct high and low level resources: high level resources, such as a host-computer, contains several low-level physical resources, such as CPU(s), memory, etc. At the border between these hierarchical levels it is typically operating system software that determines how a transaction performed on a server-computer is distributed over the low level components CPU, memory, etc. The low-level physical resources of a distributed system are distinguished in four categories: processing power (CPU), memory & cache, (database) disk and transmission.

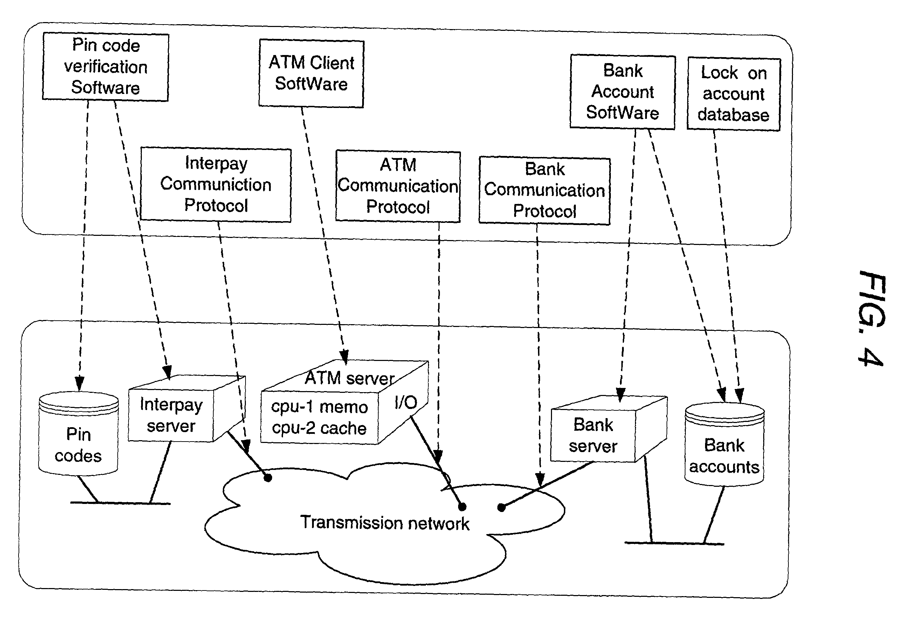

Figure 4 illustrates the cash dispenser example modelled at logical and physical resource level, including the mapping from logical to physical resource level. At the logical resource level, the logical resources of figure 3 are shown. The dashed lines indicate which logical resource needs which physical resource. The cylinders in figure 4 represent physical databases, i.e. a pin-code database and a bank account database. The cubes represent servers, i.e. an Interpay server, an ATM server and a Bank server, and the thick lines represent (LAN) transmission links, or access to a larger (unspecified) Transmission network. In figure 4 the idea of hierarchical modelling *within* the physical resource level is illustrated for the ATM server. It shows that the ATM server itself contains physical resources CPUs (1 and 2), memory, cache and an I/O transmission card.

It seems impossible to provide a complete list of parameters that characterise the performance of physical resources. Even if it was possible to provide a complete list of relevant parameters, it is very unlikely that values for all these parameters are available, or can be measured. As a result a modelling approach is proposed that leaves sufficient freedom to the user at physical resource level. It is proposed that the user specifies the physical resource *types* that will be distinguished and for each type a physical resource *unit* and the resource *sharing discipline.* Then for each physical resource its *type, capacity* (expressed in the resource unit according to its type) and optionally a characterisation of the *background load* on the physical resource and status of the physical resource can be specified (along with an *identifier / name* for the physical resource). The optional status attribute can, for example, be applied to indicate the state of a mmory cache in terms of the cached data at some point in time. Then for each combination of request, task and logical resource the user should specify 'how much of each isolated physical resource will be consumed'. This last model input will be called the 'effective resource utilisation'. An illustration of (part of) the physical resource level specification of the cash-dispenser and the effective resource utilisation concept is shown below, with some example 'effective resource utilisation'-formulae (ERU-formula).

The two CPUs in the ATM server can be specified as follows:

- *Type name:* processing power,
- *Resource unit:* seconds of processing on, e.g., a Pentium III, 500 Mhz CPU
- *Resource sharing discipline:* processor sharing (each job gets a proportional share of the processing power),
- *Identifier / name:* ATM server CPUs,
- *Physical resource type:* processing power,
- Capacity: 2.

For any cash-dispenser request at tasks "read card data" and "process data" that are served by logical resource "ATM Client Software" an effective resource utilisation-formula should be provided. We will present one example:

1. ERU("withdraw", "process data", "ATM Client Software", "ATM server CPUs") = 10ms,

o ERU("check balance", "process data", "ATM Client Software", "ATM server CPUs") = 2 ms.

The first formula expresses that it takes the "ATM server CPUs" 10 milliseconds to execute "process data" for any "withdraw"-request served by "ATM Client Software" (when executed in an empty system). The formula could also express a range of processing times (e.g. [5, 15] ms), or a probabilistic distribution function for the processing time (e.g. exponentially distributed with average processing time 10 ms).

An ERU-formula can also depend on attributes of (one of) its arguments. For example, a task execution time may depend on the status of the physical resource. Or, the transmission time of a request transferred by some task-interaction via some physical transmission link will typically depend on the request message size. This could result in an ERU-formula, such as:

o ERU("withdraw",.,., "ATM access link") = $\gamma$ x "withdraw".message_size / "ATM access link".link_rate.

Typically, such 'effective resource utilisation'-formulae depends on the performance measure of interest, e.g. response time, throughput or availability performance. Without giving a specific format for the 'compact performance model' the idea is that such a 'model' is sufficient for doing an unambiguous performance evaluation via simulation. In some practical cases it is well possible that the physical resource level (or other model level) details are not available, or are regarded irrelevant. For those cases it is useful for the model design to be able to abstract from details by specifying some model entity as a 'black box'. For example, it is up to the user to model the physical resources at the ATM as either a high level host-computer as a single entity (black-box), or by specifying the CPU, memory and transmission details inside the host-computer.

The specification of ERU-formulae is left up to the user. The creativity of ERU-formula specification is, preferably, only bounded by two restrictions:

- all the parameter values in the ERU-formula are available from, or can be derived from experiments and
- the ERU-formula should contain sufficient information and clear interpretation to be able to derive the load induced by any combination of requests, task(-interaction)s and logical resources on each physical resource.

Clearly, model specification at the physical resource level leaves a large degree of freedom open for the user. Table 3 presents the physical resource level extensions regarding model entities and (example) attributes.

Table 3:

| physical resource level model entities and example-attributes | | | |
|---|---|---|---|
| **PR level entities** | **Application level attributes** | **LR level attributes** | **PR level attributes** |
| Physical resource type | | | Type name |
| | | | Resource unit |
| | | | Resource sharing discipline |
| Physical resource | | | Identifier / name |
| | | | Physical resource type |
| | | | Capacity (in resource units) |
| | | | *Optional:* background load (in resource units) |
| | | | *Optional:* physical status |

Table 3:   (continued)

| physical resource level model entities and example-attributes | | | |
|---|---|---|---|
| **LR level entities** | **Application level attributes** | **LR level attributes** | **PR level attributes** |
| Logical resource | | Identifier / name | Physical resource(s) that execute the logical resource |
| | | Maximun level of concurrency | Effective resource utilisation (ERU) formula* |
| | | *Optional:* Resource availability | LR parameter(s) in ERU formula |
| **Application level entities** | **Application level attributes** | **LR level attributes** | **PR level attributes** |
| Request | Type | Optional priority of request | ERU-formula* |
| | Sequence Number | | Request parameter(s) in ERU formula |
| Task | Identifier/name | LR(s) required for execution of request@task | Effective resource utilisation formula* |
| | Input & output ports, | | |
| | Input to output port routing •input conditions •output spec | LR(s) released after execution of request@task | Task parameter(s) in ERU formula |
| Task interaction | Identifier/name | LR(s") required for execution of task-interaction | Effective resource utilisation formula* |
| | Preceding task output port | LR(s) released after execution of task-interaction | Task-interaction parameter (s) in ERU formula |
| | Successor task input port | | |

The * behind the effective resource utilisation formula attributes denotes that only one ERU-formula needs to be specified per combination of request, task(-interaction) and logical and physical resource.

The dynamic behavior at physical resource level is an extension of the dynamic behavior at application and at logical resource level. At application level the dynamic behavior is affected by the introduction of physical resource status, which can have impact on task level routing. For example, the status of a physical resource status can be used to denote whether some content is cached, at some point in time. If not, then the following task will be to retrieve the content; if not, then this task will be omitted. At logical resource level a task can serve a request (by using some logical resources), if the request has enabled the task (as specified at application level) and the task and request have acquired the required logical resource threads. In the remainder we will refer to a request that enables a task as a 'job' and to a task that can serve a request as an 'activated job'. Via the mappings between application, logical resource and physical resource level all 'jobs' are mapped to physical resource(s). For example, in the cash-dispenser example requests at tasks "read card data" and "process data" are mapped to the "ATM Client Software" logical resource, which executes on the "ATM server". The mapping of logical to physical resources will be (implicitly) denoted by positive resource utilization expressed in the ERU formula.

At physical resource level each physical resource *will serve* all 'activated jobs' mapped to the physical resource, according to the resource sharing discipline as specified by the physical resource's attribute. The physical resource has *completed* the activated job, once the job's attained service equals the job's service requirement (as specified by its effective resource utilisation formula). For example, suppose a "process data" task is enabled with a "withdraw"-request at an "ATM server" and the background load on the "ATM server" is 50% of its capacity. Then it will take the "ATM server" 10 / 0.5 = 20 ms (see also ERU-formula above) to complete this activated job's service. Once all physical resources have completed service of an activated job (recall that jobs may require execution on more than one physical resource), then the job *is served.* The dynamic rules at logical resource level further specify what happens to jobs that are served.

Similar dynamic rules apply for task-interactions that are triggered by a request. Once they have acquired the logical resource threads, they are 'activated jobs' that will be served by the physical resources corresponding to the request, task-interaction and logical resource(s). The formalism at physical resource level is an extension of the formalism of the logical resource level, and is described in Annex 1.

Note that at physical resource level only the dynamic behaviour of isolated physical resources needs to be described. Interaction between dynamic behaviour of physical resources follows from consecutive actions (i.e. the dynamic behaviour) at the logical resource and application level.

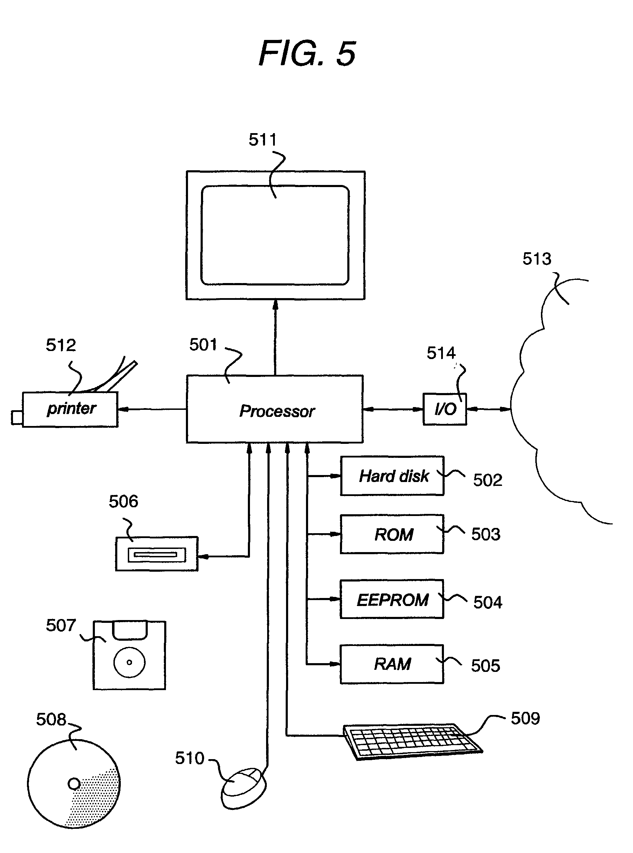

Figure 5 shows a schematic block diagram of an embodiment of an analysing apparatus of the present invention, comprising a processor 501 with peripherals. The processor 501 is connected to memory units 502, 503, 504, 505 which store instructions and data, one or more reading units 506 (to read, e.g., floppy disks 507, CD ROM's 508, DVD's, etc.), a keyboard 509 and a mouse 510 as input devices, and as output devices, a monitor 511 and a printer 512. The analysing apparatus is connected to a distribution network 513 through I/O means 514. The memory units shown comprise RAM 514, (E)EPROM 515, ROM 516 and hard disk 517. However, it should be understood that there may be provided more and/or other memory units known to persons skilled in the art. Moreover, one or more of them may be physically located remote from the processor 501, if required. The processor 501 is shown as one box, however, it may comprise several processing units functioning in parallel or controlled by one main processor, that may be located remote from one another, as is known to persons skilled in the art. Moreover, other input/output devices than those shown (i.e. 509, 510, 511, 512) may be provided.

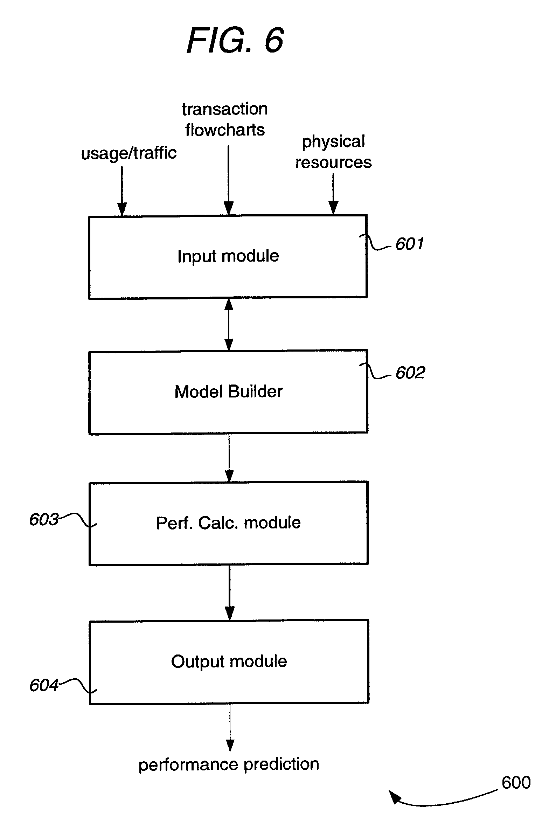

Figure 6 shows schematically a first embodiment of the executive program of the present invention. The executive program 600 comprises an input module 601, a Model Builder 602, a performance calculation module 603 and an output module 604. Model input that is required by the executive program 600 from a user, named the 'performance manager', follows directly from the hierarchical modelling input parameters (as presented in table 1-3). Roughly, the model input can be classified in three groups, i.e. usage/traffic data, transaction flow charts data, and physical resource data. These three groups of data are input for the input module 601, see figure 6. The input module 601 pre-processes the input data in order to provide the Model Builder 602 with the necessary data. If the Model Builder 602 is not provided with all the necessary data, it requests the input module 601 for additional data. From all this data the model builder 602 constructs a performance model as described above. This performance model is input to a performance calculation module 603 that will produce performance predictions for the specified usage/traffic of the distributed systems.

In this embodiment, a performance manager (i.e. a user) can compare these performance predictions to the performance requirements specified by the performance manager. Either, the predictions meet the requirements, or the predictions do not meet (some of) the requirements. In the later case, the performance manager can take action. In general, the user will provide the model input by descending the hierarchical model levels, starting at the application level. At application level, input regarding application requests and input regarding application flowcharts in terms of tasks and task-interactions are required. Descending to logical resource level, additional input regarding logical resources can be specified. After specification of the logical resources the analysing apparatus 600 will request the performance manager (i.e. the user) to specify the relations between the tasks and task-interactions and the logical resources (e.g. which logical resource is required for execution of a task(-interaction)). Similarly, descending to physical resource level additional input regarding physical resources can be specified and the analysing apparatus will request the performance manager to specify the relations between the tasks, task-interactions, logical resources and the physical resources. In one embodiment, descending to logical resource and physical resource level is not required. If no details at these levels are known or the performance manager expects that details are irrelevant, then application (or logical resource) level entities need not be worked out at lower level(s). In this embodiment, the performance manager can simply specify an expected or monitored task response time.

Besides model input, the input module may request additional input for configuration of the performance evaluation module, not shown in figure 6. For example, if the performance model is evaluated by applying a simulation engine, then input regarding the desired confidence level (e.g. via input parameters "simulation run-time" and "number of simulation runs") is required.

The performance calculation module 603 is arranged to generate log-files that contain detailed information regarding, for example, request sojourn times at tasks, at logical and physical resources, etc. The output module 604 converts these detailed log-files into performance statistics, such as average and <u>variation</u> of the end-to-end request sojourn times, average logical and physical resource utilisation, request throughput, etc. The output module presents several of these high-level statistics by default.

In one embodiment the performance manager can also request other, more specific, performance metrics via the output module. The output module will apply statistical functions to the evaluation log-files, in order to convert that data to the requested metrics.

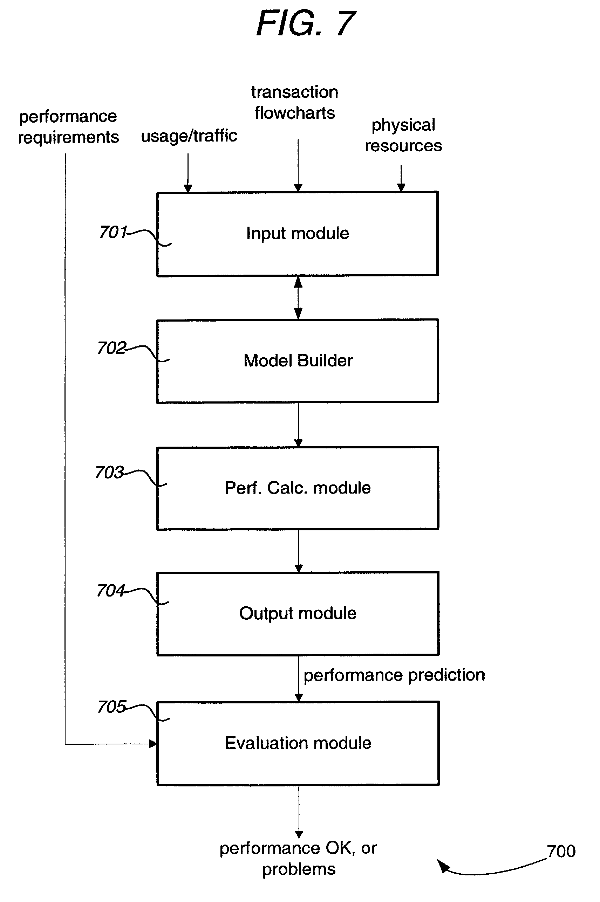

Figure 7 shows schematically another embodiment of the executive program of the invention. Executive program 700 comprises an input module 701, a Model Builder 702, a performance calculation module 703 and an output module 704 which resemble the modules 601, 602, 603, 604 shown in figure 6. An evaluation module 705 extends the modules. The evaluation module 705 receives the calculated performance from output module 704,and also receives a required performance from the performance manager. The evaluation module 705 is arranged to automatically compare the calculated performance metrics to the required performance, and to output an ok signal if the requirements are met or to report problems if the requirements are not met. It is noted that the above mentioned embodiment can be used for modelling both operational as well as designed distributed systems.

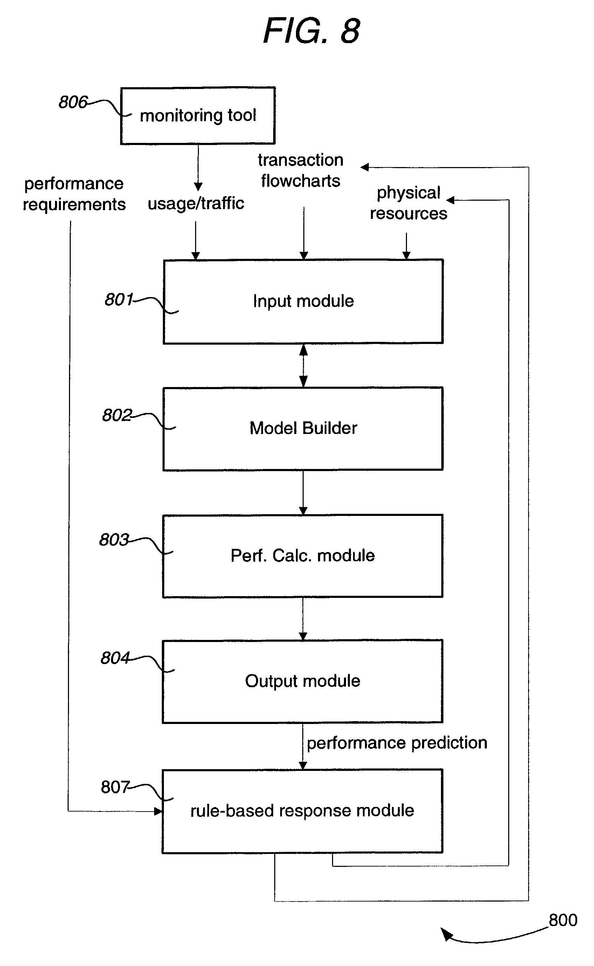

Figure 8 shows yet another embodiment of the executive program of the invention with which the evaluation of a performance management process can be automated further. The executive program 800 comprises an input module 801, a Model Builder 802, a performance calculation module 803, an output module 804, a monitoring tool 806 and a rule-base response module 807. With this embodiment, one can automate an iterative measurement - analysis - response control loop. In this control loop, measurements from an operational system are performed by monitoring tool 806. The monitoring tool 806 collects relevant data from the operational system, like for example current CPU utilisation, or number of logged-in clients. This data is converted by the input module 801 and used by the model builder 802. Next, the performance calculation module 803 calculates the performance of the model. In case the required performance is not met, the rule-based response module 807 will automatically make adequate changes in the platform configurations (e.g. do not accept more client log-ins, to avoid server overload) or transaction flowcharts, in order to resolve the problems, or it will generate an alarm. In order to make changes to the platform configuration, the rule-based response module contains a set of rules predefined by the user of the analysing apparatus or by the performance manager.

Annex 1

A formal specification of an application level model involves definition of sets and definitions of mappings between these sets. Once the required sets and mapping are defined, an unambiguous mathematical model is specified. In the text box below the formalisation of the application level is presented.

For all of the presented formal description the following notation conventions are used:

* Int represents the set of integer numbers;
* Real represents the set of real numbers;
* P(S) represents the power-set of set S (i.e. the set of all subsets of S);
* S1x S2 represents the Cartesian product of sets S 1 and S2.

In the text box below a so-called < T, R, I, M, P, A, s0> formalisation of the application level is given:

Formally, an application level model is represented as a seven-tuple $< T, R, I, M, P, A, s_0>$. $T$ is the set of tasks, $R$ is the set of requests and $I$ is the set of task-interactions. Each request is represented by a request type and a request sequence number; therefore the set of requests is a Cartesian product: $R = $ 'Types' x Int. $P$ is the set of input and output (task-)ports, represented by the Cartesian product: $P = T$x{input, output}xInt. In the remainder we will mention input- and output ports of task $t$ as elements from $\{t\}$x{input}xInt, respectively $\{t\}$x{output}xInt.

$M$ represents the set of all routing rules (it can be regarded as a routing matrix). $M$ is a mapping from the Cartesian product $T$x$R$ to a routing rule. A routing rule is a pair of an input condition and an output specification. An input condition for task $t \in T$ is a (non-empty) set of pairs of sets (respectively non-empty and possibly empty) of task $t$ input ports. In technical notation an input condition for task $t \in T$ is of form: $\{(P_k, Q_k) \mid N \geq k > 0, P_k, Q_k \subseteq \{t\}$x{input}xInt $\}$, for some $N > 0$. An output specification for task $t \in T$ is a set of pairs, where each pair contains a (possibly empty) sub-set of the output ports from $P$ (i.e. $\{t\}$x{output}xInt) and a probability. These probabilities will always sum up to 1 for each output specification set. An output specification for task $t \in T$, for some $N \geq 0$, is of form: $\{(P_k, Pr_k) \mid N > k > 0, P_k \subseteq \{t\}$x{output}xInt $, \Sigma_k\ Pr_k = 1\}$.

Mapping $A(.)$ specifies for each of the task-interactions $i \in I$ the corresponding input and output port, represented by a pair $(p_i, p_j)$, where $p_j \in T$x{input}xInt and $p_i \in T$x{output}xInt.

The initial state $s_0$ is a mapping from requests (from $R$) to input and output ports (from $P$) and a probability distribution function. This probability distribution function specifies the request inter-arrival times, for externally arriving requests (at the specified input or output port). Internal requests are specified by a 'zero probability function'.

Finally, a memory is used for each combination of task and request for which the routing rule has an input-condition whose set contains at least two elements (this means that the input-condition is a join-or for which only first request will be passed). A memory is a mapping from T to a sub-set of R, denoted by Mem(.). All memories are updated as requests are being served at the tasks; initially all memories are empty.

As an example the cash dispenser example, shown in figure 2 is specified in this $< T, R, I, M, P, A, s_0 >$ formalism:

- $T = \{$ *read card data, check pin code, check band account, process data, pay and return card, don't pay return card, keep card and inform police* $\}$ ,
- $R = \{withdraw\} \times$ Int,
- $I = \{i_1, i_2, i_3, i_4, i_5, i_6, i_7\}$ ,
- $P = \{in^1_{read\ card\ data}, out^1_{read\ card\ data}, out^2_{read\ card\ data},$
  $in^1_{check\ pin\ code}, out^1_{check\ pin\ code},$
  $in^1_{check\ bank\ account}, out^1_{check\ bank\ account},$
  $in^1_{process\ data}, in^2_{process\ data}, out^1_{process\ data}, out^2_{process\ data}, out^3_{process\ data},$
  $in^1_{pay\ and\ return\ card}, out^1_{pay\ and\ return\ card},$
  $in^1_{don't\ pay\ return\ card}, out^1_{don't\ pay\ return\ card},$
  $in^1_{keep\ card\ and\ inform\ police}, out^1_{keep\ card\ and\ inform\ police}\}$ ,
- $M$ and $A$ defined by:

$$
M = \begin{cases}
(read\ card\ data, r) \rightarrow \left( \left\{ (\{in^1_{read\ card\ data}\}, \varnothing) \right\}, \left\{ (out^1_{read\ card\ data}, 1), (out^2_{read\ card\ data}, 1) \right\} \right) \\[8pt]
(t, r) \rightarrow \left( \left\{ (\{in^1_t\}, \varnothing) \right\}, \left\{ (out^1_t, 1) \right\} \right) \\[8pt]
(process\ data, r) \rightarrow \begin{pmatrix} \left\{ (\{in^1_{process\ data}, in^2_{process\ data}\}, \varnothing) \right\}, \\[6pt] \left\{ (out^1_{process\ data}, p_1), (out^2_{process\ data}, p_2), (out^3_{process\ data}, 1-p_1-p_2) \right\} \end{pmatrix}
\end{cases}
$$

for any $r \in \{withdraw\} \times$ Int and $t \in \{$*check pin code, check bank account, pay and return card, don't pay return card, keep card and inform police*$\}$.

$$
A = \begin{cases}
i_1 \rightarrow (out^1_{read\ card\ data}, in^1_{check\ pin\ code}) \\[6pt]
i_2 \rightarrow (out^2_{read\ card\ data}, in^1_{check\ bank\ account}) \\[6pt]
i_3 \rightarrow (out^1_{check\ pin\ code}, in^1_{process\ data}) \\[6pt]
i_4 \rightarrow (out^1_{check\ bank\ account}, in^2_{process\ data}) \\[6pt]
i_5 \rightarrow (out^1_{process\ data}, in^1_{pay\ and\ return\ card}) \\[6pt]
i_6 \rightarrow (out^1_{process\ data}, in^1_{don't\ pay\ return\ card}) \\[6pt]
i_7 \rightarrow (out^1_{process\ data}, in^1_{keep\ card\ and\ inform\ police})
\end{cases}
$$

The dynamic behaviour at application level can be formalised by the following 'dynamic behaviour rules':

Let set $s^t_r \subseteq R \times P$ be: $s^t_r = \{(r',p) \mid (r',p) \in s, r'=r, p \in \{t\} \times \{input, output\} \times Int\}$, i.e. the projection of state $s$ for task $t$ and request $r$. An input condition for task $t$ and request $r$ is *satisfied* by the set $s^t_r$ of instances of request $r$ arrived at input ports of $t$, if and only if there is an index $k$ for which $\{(r,p) \mid p \in P_k\} \subseteq s^t_r$ and for all $q \in Q_k$, $(r,q) \notin s^t_r$ where the input-condition of $M(t,r)$ equals $\{(P_k, Q_k) \mid N \geq k > 0, P_k, Q_k \subseteq \{t\} \times \{input\} \times Int \}$.

If an input condition for task $t$ is satisfied by the set $s^t_r$ for request $r$, then $t$ can *serve* the set of request arrivals $s^t_r$. If $t$ does *serve* $s^t_r$ and $r \in Mem(t)$, then set $s^t_r$ is subtracted from state $s$. If $t$ does *serve* $s^t_r$ and $r \notin Mem(t)$, then set $s^t_r$ is subtracted from state $s$ and with probability $Pr_k$, $\{(r, p) \mid p \in P_k\}$ is added to state $s$, where the output-specification of $M(t,r)$ equals $\{(Pk, Prk) \mid N > k > 0, Pk \subseteq \{t\} \times \{output\} \times Int , \Sigma k \ Prk = 1\}$. Further, if t does serve str, $r \notin Mem(t)$ and the input-condition of M(t,r) contains more than one element (i.e. t is a join-or for r), then r is added to Mem(t).

A request (instance) $r$ arrival at output port $p_{out}$ (i.e. $(r, p_{out}) \in s$) enables the *transfer* of the request by all task-interactions $i$, for which $A(i)= (p_{out}, p^i_l)$ for some input port $p^i_l$. If the request $r$ is transferred, then element $(r, p_{out})$ is subtracted from state $s$ and all elements $(r, p^i_l)$ are added to state $s$.

In the text box below a formalisation of the logical resource level is presented. The formalisation at logical resource level is an *extension* of the formalism at application level, in the sense that it completely includes the application level formalism.

**Formalism and sets**

Formally, a logical resource level model is represented as a nine-tuple $< T, R, I, M, P, A, s_0, LR, \#T >$. $T$ is the set of tasks, $R$ is the set of requests and $I$ is the set of task-interactions. Each request is represented by a request type and a request sequence number; therefore the set of requests is a Cartesian product: $R = $ 'Request-Types' x Int, where 'Request-Types' can be defined by the model-designer. $P$ is the set of input and output (task-)ports, represented by the Cartesian product: $P = T$x{input, output}xInt.

All these sets are 'inherited' from the task level. At logical resource level we extend the set of task-interactions by taking it as a Cartesian product: $I$ x Int. This extension reflects the notion that several subsequent middleware actions can be distinguished for a task-interaction. Additional logical resource level set $LR$ represents the set of logical resources, defined by the Cartesian product: $LR = $ 'Resource-Types' x Int. Here 'Resource-Types' is a set of logical resource types that can be defined by the model-designer, the second set (Integers) is used to give each logical resource a unique identifier.

**Mappings, attributes**

$M$ represents the set of all routing rules (it can be regarded as a routing matrix) and resource possession rules. $M$ is a mapping from the Cartesian product $(T \cup I$xInt$)$ x $R$ to a routing rule and a thread-rule (although also task-interactions (in $I$) are included in the matrix routing rules only need to be specified for tasks, not for task-interactions). A *resource possession rule* is a pair of subsets from $LR$; the first subset denotes the required resource-threads for executing a task or task-interaction and the second subset denotes which threads are released after executing a task or task-interaction. A *routing rule* is a pair of an input condition and an output specification. An input condition for task $t \in T$ is a (non-empty) set of pairs of sets (respectively non-empty and possibly empty) of task $t$ input ports. In technical notation an input condition for task $t \in T$ is of form: $\{(P_k, Q_k) \mid N \geq k > 0, P_k, Q_k \subseteq \{t\}$x{input}xInt $\}$, for some $N > 0$.

An output specification for task $t \in T$ is a set of pairs, where each pair contains a (possibly empty) sub-set of the output ports from $P$ (i.e. $\{t\}$x$\{$output$\}$xInt) and a probability. These probabilities will always sum up to 1 for each output specification set. An output specification for task $t \in T$, for some $N \geq 0$, is of form: $\{(P_k, Pr_k) \mid N > k > 0, P_k \subseteq \{t\}$x$\{$output$\}$xInt$, \Sigma_k \ Pr_k = 1\}$.

Mapping $A(.)$ specifies for each of the task-interactions $i \in I$x$\{1, .., N\}$ ($N \in$ Int) the corresponding input and output port, represented by a pair $(p_i, p_j)$, where $p_j \in T$ x$\{$input$\}$xInt and $p_i \in T$ x$\{$output$\}$xInt. $N$ denotes the number of subsequent 'middleware' actions during the task-interaction. $N$ can be retrieved from mapping $M$ for each task-interaction: $N$ is the smallest positive integer for which $M$ is unspecified, i.e. $M(i, N+1, r) = nill$.

The initial state $s_0$ is a mapping from requests (from $R$) to a sub-set of task input and output ports (from $P$), a probability distribution function and a set of assigned logical resource threads. The probability distribution function specifies the request inter-arrival times.

The mapping $\#T(.)$: $LR \rightarrow$ Int specifies the maximum number of threads available per logical resource.

For the (dynamic) assignment of logical resource threads to requests undergoing some task performed by the logical resource we introduce the mapping $Threads(.)$: $R \rightarrow P(LR)$. Finally, a memory is used for each combination of task and request for which the routing rule has an input-condition whose set contains at least two elements (this means that the input-condition is a join-or for which only first request will be passed). A memory is a mapping from $T$ to a sub-set of $R$, denoted by $Mem(.)$. Both the thread assignment and memory mapping are updated as requests are being served at the tasks (i.e. the mappings are part of the state-specification); initially all memories are empty.

**State and state projection**

The state of the modelled system is represented by a three-tuple: $< RIS, Mem(.), Threads(.) >$. $RIS$ represents the ordered list of request instances, arrived at the task ports or -interactions: $RIS \subseteq R$ x $(P \cup I$xInt$)$. The order in $RIS$ represents the chronological order of request instance arrivals. A projection $s'_r \subseteq R$x$P$ of state $s$ (for $s = < RIS, Mem(.), Threads(.) >$) for task $t$ and request $r$ is defined as: $s'_r = \{(r, p) \mid$

$(r,p) \in RIS$, $p \in \{t\} \times \{\text{input, output}\} \times \text{Int}$. Similarly a projection $s^i_r \subseteq R \times I \times \text{Int}$ of state $s$ for task-interaction $i$ and request $r$ is defined as: $s^i_r = \{(r,i) \mid (r,i) \in RIS, i \in I \times \text{Int}\}$.

**Dynamic behaviour rules**

Let set $s^t_r$ be the projection of state $s$ for task $t$ and request $r$. An input condition for task $t$ and request $r$ is <u>satisfied</u> by $s^t_r$, if and only if there is an index $k$ for which $\{(r,p) \mid p \in P_k\} \subseteq s^t_r$ and for all $q \in Q_k$, $(r,q) \notin s^t_r$ where the input-condition of $M(t,r)$ equals $\{(P_k, Q_k) \mid N \geq k > 0, P_k, Q_k \subseteq \{t\} \times \{\text{input}\} \times \text{Int}\}$.

If an input condition for task $t$ is satisfied by the set $s^t_r$ for request $r$ and $r \in Mem(t)$, then set $s^t_r$ is subtracted from state $RIS$ (i.e. the request-instance is terminated because an earlier request-instance already passed the join-or task; that earlier request-instance will handle the threads that the terminated request still might hold). If an input condition for task $t$ is satisfied by the set $s^t_r$ for request $r$ and $r \notin Mem(t)$, then the request $r$ <u>contends</u> for the threads $thrd\text{-}cnd \subseteq LR$ to execute task $t$, where $M(t,r) = (.,.,thrd\text{-}cnd,.)$ .

Request $r$ contending for thread(s) $thrd\text{-}cnd$ (to execute any task) can be <u>assigned</u> a thread for logical resource $lr \in LR$, if and only if $lr \notin Threads(r)$, $lr \in thrd\text{-}cnd$ and $\Sigma_{r \in R}\, 1[lr \in Threads(\underline{r})] < \#T(lr)$. We restrict the thread assignment policy to a First Come First Served discipline[1]: for all requests that can be assigned a thread, threads are assigned to according to their order in state variable $RIS$. If a thread for $lr$ is assigned to $r$, then $Threads(r) := Threads(r) + \{lr\}$.

If a contending request $r$ has obtained its required threads, i.e. $thrd\text{-}cnd \subseteq Threads(r)$, then task $t$ for request $r$ can be <u>executed</u>. If task $t$ for request $r$ is executed, then set $s^t_r$ is subtracted from state $RIS$ and with probability $Pr_k$, $\{(r,p) \mid p \in P_k\}$ is added at the end of state-list $RIS$, where the output-specification of $M(t,r)$ equals $\{(P_k, Pr_k) \mid N > k > 0, P_k \subseteq \{t\} \times \{\text{output}\} \times \text{Int}, \Sigma_k\, Pr_k = 1\}$. Also, the threads specified by $M(t,r) = (.,.,., thrd\text{-}rls)$ are released for request $r$: $Threads(r) := Threads(r)\, /\, thrd\text{-}rls$. Further, if task $t$ for request $r$ is executed, $r \notin Mem(t)$ and the input-condition of $M(t,r)$ contains more than one element (i.e. $t$ is a join-or for $r$), then $r$ is added to $Mem(t)$.

A request (instance) $r$ arrival at output port $p_{out}$ (i.e. $(r, p_{out}) \in RIS$) <u>triggers</u> the transfer of the request by all task-interactions $i$, for which $A(i,n) = (p_{out}, p^i_l)$ for some $n \in \text{Int}$ and

input port $p^i_l$. If transfer of a request by a task-interaction is triggered, then the request will sequentially <u>contend</u> for the threads $thrd\text{-}cnd \subseteq LR$ to execute task-interaction $i$ for step $1 \leq n \leq N$, where $M(i,n,r)=(.,.,thrd\text{-}cnd,.)$ and $M(i,N+1,r)=nill$. Thread assignment for a triggered request is the same as for requests contending for threads to execute a task!

If a triggered request has obtained threads for its (first) task-interaction step, i.e. $thrd\text{-}cnd \subseteq Threads(r)$, then it can be <u>executed</u>. If the first task-interaction step $(i,1)$ is executed, then element $(r, p_{out})$ is subtracted from state $RIS$ and element $(r, i,1)$ is added to state $RIS$ and the threads specified by $M(i,1,r) = (.,.,., thrd\text{-}rls)$ are released: $Threads(r) := Threads(r) \,/\, thrd\text{-}rls$. For following steps $1<n<N$ similar rules hold: the request contends for the required threads for step $n$, once obtained the step is executed and $RIS := RIS - \{(r,i,n)\}+ \{(r,i,n+1)\}$, $Threads(r) := Threads(r) \,/\, thrd\text{-}rls_n$, where $M(i,n,r) = (.,.,., thrd\text{-}rls_n)$.

Once the $N^{\text{th}}$ step is executed, then request $r$ is <u>transferred</u> by task-interaction $i$. If the request $r$ is transferred, then element $(r,i,N)$ is subtracted from state $RIS$ and all elements $(r, p^i_l)$ are added to state $RIS$. Further, $Threads(r) := Threads(r) \,/\, thrd\text{-}rls_N$, where $M(i,N,r) = (.,.,.,, thrd\text{-}rls_N)$. Note that $N=1$ is possible, meaning that the first step is immediately the last step.

- [1] More complex thread assignment policies, for example, those that take request priorities into account, can also be included. Further, if the optional 'resource availability' attribute is applicable, then a thread may only be assigned if the thread is indeed available.

In order to keep this most extensive formalism 'short', merely the mathematical description of the physical resource level is presented. Most of the intuitive explanation behind the formalism is excluded in the text box below, but it can be found in the text above and in the logical resource level formalism.

In the text box below the formalisation of the physical resource level is given:

| Physical resource level formalism: *"TRIMPALS PRODUCT"* Formally, a physical resource level model is represented as a tuple: < $T$, $R$, $I$, $M$, $P$, $A$, $LR$, $S$, $s_0$, $PR$, $O$ $D$, $U$, $C$, $\#T$ >. For each of these sets and mappings in the tuple the table below presents their mathematical description and their interpretation. | | |
|---|---|---|
| **Sets** | | |
| $T$ | Arbitrary set | Represents Tasks |
| $R$ | *Rqst-types* × Int | Represents Requests |
| *Rqst-types* | Arbitrary set | |
| $I$ | Arbitrary set | Represents task-Interactions |
| $P$ | $T$ × {input, output} × Int | Represents task input and output Ports |
| $LR$ | *Rsrc-types* × Int | Represents Logical Resources |

(continued)

| Sets | | |
|---|---|---|
| *Rsrc-types* | Arbitrary set | |
| *PR* | *HW-types* $\times$ Int | Represents Physical Resources |
| *HW-types* | Arbitrary set | |
| S | Arbitrary set | Represents physical resources Status |
| **Auxiliary set** | | |
| *RIS* | Ordered list of elements from: $R \times (P \cup I \times \text{Int})$ | Represents chronological ordered list of Request Instance State |
| **Mappings** | | |
| *M* | $(T \cup I \times \text{Int}) \times R \times \text{P}(PR) \rightarrow$ *Route-rules* $\times$ *Thread-rules* | Routing Matrix (route-rule not specified for *task-interactions*) |
| *Route-rules* | *Input-Conds* $\times$ *Output-Specs* | |
| *Input-Conds* | $\{\{(P_k, Q_k) \mid N \geq k > 0; P_k, Q_k \subseteq \{t\} \times \{input\} \times \text{Int}\} \mid t \in T, N > 0\}$ | |
| *Output- Specs* | $\{\{(P_k, Pr_k) \mid N > k > 0; P_k \subseteq \{t\} \times \{output\} \times \text{Int}; \sum_k Pr_k = 1\} \mid t \in T; N \geq 0\}$ | |
| *Thread-rules* | $\text{P}(LR) \times \text{P}(LR)$ | |
| *A* | $I \times \{1, , N\} \rightarrow (T \times \{output\} \times \text{Int}) \times (T \times \{input\} \times \text{Int})$, ( $N$ is smallest positive $N \in$ Int, for which $M(i,N+1,r)=nill$) | Task-interactions (Arcs) path of N logical resources |
| $s_0$ | $R \rightarrow \text{P}(P) \times \text{P}(LR) \times PDF$ | Initial model State and request inter-arrival time distributions |
| *#T* | $LR \rightarrow Int$ | Maximum number of Threads per logical resource |
| *D* | *HW-types* $\rightarrow (RIS \rightarrow [0..1])$ (where [ 0..1 ] denotes an ordered list of real values between zero and one) | Physical resource sharing Discipline: mapping from 'queue' to 'fraction of service', for each type of HW |
| *O* | $S \times T \times R \rightarrow S$ | Status Override rules |
| *C* | $PR \rightarrow Real$ | Physical resource Capacity (in resource units / system time unit) |
| *U* | $R \times (P \cup I \times \text{Int}) \times \text{P}(LR) \times PR \rightarrow Real$ | Effective resource Utilization formula |
| **Auxiliary mappings** | | |
| *Mem* | $T \rightarrow \text{P}(R)$ | Join-or Memory function |
| *Threads* | $R \rightarrow \text{P}(LR)$ | Assigned logical resources |
| *Att-Serv* | $R \times (P \cup I \times \text{Int}) \times PR \times Real \rightarrow Real$ | Attained Service (in resource units) for request at some task, served by some PR, at any system time |
| *Status* | $PR \rightarrow S$ | *Status* of physical resources |
| *The sets and mapping need to be specified by the model designer. The auxiliary sets and mappings are not specified by the model designer, but are necessary for expressing dynamic model states.* | | |

**State, state projection and system time**

The state of the modelled system is represented by a five-tuple: $< RIS, Mem(.),$ $Threads(.), Att\text{-}Serv(..), Status(.) >$. Initially $RIS$ is defined by $s_0$, $Mem(.)=empty$ and $Att\text{-}Serv(..)=0$. As the system time $t_S$ proceeds, the state of the modelled system will change according the dynamic behaviour rules presented below.

For any task $t$ and request $r$ a projection $s^t_r \subseteq R\mathrm{x}P$ of state $s = < RIS, Mem(.), Threads(.),$ $Att\text{-}Serv(..), Status(.) >$ is defined as: $s^t_r = \{(r,p) \mid (r,p)\in RIS , p\in \{t\}\mathrm{x}\{input,$ $output\}\mathrm{x}\mathsf{Int} \}$. Similarly a projection $s^i_r \subseteq R \times I\mathrm{x}\mathsf{Int}$ of state $s$ for task-interaction $i$ and request $r$ is defined as: $s^i_r = \{(r,i) \mid (r,i)\in RIS , i\in I\mathrm{x}\mathsf{Int} \}$.


**Dynamic behaviour rules**

*Request arrival rule*: for each request type $rt \in Rqst\text{-}types$ the inter-arrival times between requests $(rt,i) \in Rqst\text{-}types \times \mathsf{Int}$ are generated according to the probability distribution function $F$, where $s_0(rt,i) = (. ,. , F)$.


*Task satisfaction rule*: let $t\in T, r\in R, \{lr\} \subseteq LR$ and $\{pr\}\subseteq PR$, such that $\{lr\}$ and $\{pr\}$ are precisely the logical respectively, physical resources required to execute request $r$ for task $t$ ( i.e. $M(t,r, \{pr\}) = (. , (\{lr\},.))$ and for all $pr\in \{pr\}: U(r,(t,.,.),\{lr\},pr) > 0$ and for $pr\notin \{pr\}: U(r,(t,.,.), \{lr\},pr) = 0$ ). An input condition for task $t$, request $r$ and (status of) physical resources $\{pr\}$ is <u>satisfied</u> by $s^t_r$, if and only if there is an index $k$ for which $\{(r,p)\mid p\in P_k\} \subseteq s^t_r$ and for all $q\in Q_k$ , $(r,q) \notin s^t_r$ where the input-condition of $M(t,r,\{pr\})$ equals $\{(P_k, Q_k) \mid N\geq k>0, P_k, Q_k \subseteq \{t\}\mathrm{x}\{input\}\mathrm{x}\mathsf{Int} \}$.

If an input condition for task $t$ is satisfied by the set $s^t_r$ for request $r$ and $r\in Mem(t)$, then set $s^t_r$ is subtracted from state $RIS$. If an input condition for task $t$ is satisfied by the set $s^t_r$ for request $r$ and $r\notin Mem(t)$, then request $r$ <u>contends</u> for the threads $\{lr\} \subseteq LR$ to execute task $t$, where $M(t,r,\{pr\})=(.,(\{lr\},.))$.


*Task-interaction trigger rule*: a request (instance) $r$ arrival at output port $p_{out}$ (i.e. $(r, p_{out}) \in RIS$) <u>triggers</u> the transfer of the request by all task-interactions $i$, for which $A(i,n)= (p_{out}, p^i_I)$ for some $n\in \mathsf{Int}$ and input port $p^i_I$.

If transfer of a request by a task-interaction is triggered, then the request will sequentially <u>contend</u> for the threads $\{lr\}_n \subseteq LR$ to execute task-interaction $i$ for step $1 \leq n \leq N$, where $M((i,n),r,\{\underline{pr}\}) = (.,(\{\underline{lr}\}_n,.))$ and $M((i,N+1),r,\{\underline{pr}\}) = nill.$

*<u>Logical resource assignment rule</u>*: request $r$ contending for thread(s) $\{\underline{lr}\}$ (to execute any task) can be <u>assigned</u> a thread for logical resource $lr \in LR$, if and only if $lr \notin Threads(r)$, $lr \in \{\underline{lr}\}$ and

$\Sigma_{\underline{r} \in R} 1[lr \in Threads(\underline{r})] < \#T(lr).$

We restrict the thread assignment policy to a First Come First Served discipline: for all requests that *can be* assigned a thread, threads *are* assigned according to their order in state variable *RIS*. If a thread for $lr$ is assigned to $r$, then $Threads(r) := Threads(r) + \{ lr \}$. Thread assignment for requests triggered by a task-interaction is the same as for requests contending for threads to execute a task!

*<u>Execution progress rule</u>*: if a contending request $r$ has obtained its required threads, i.e. $\{lr\} \subseteq Threads(r)$, then task $t$ for request $r$ can be <u>executed</u>. Similarly, if a triggered request has obtained threads for its (first) task-interaction step, i.e. $\{\underline{lr}\} \subseteq Threads(r)$, then it can be <u>executed</u>. At any system time $t_S$ let $\underline{RIS}$ be the ordered list of request instances that can be executed (i.e. $\underline{RIS}$ is the ordered list of request instances derived from *RIS* after removing the requests that can not be executed). The following (differential) equation specifies how task and –interaction (denoted by $pin \in P \cup IxInt$) for request $r$ that *can be* executed, *are* being executed by the physical resources:

$$Att\text{-}Serv(r,pin,pr, t_S+\Delta t) \;=\; Att\text{-}Serv(r,pin,pr, t_S) + \Delta t x C(pr) x D(pt, \underline{RIS})_{(j)} \;,$$

where $\Delta t \in \text{Real}$, $\exists\, j,k \in \text{Int}$: $\underline{RIS}_{(j)} = (r,pin) \wedge pr = (pt,k)$ and $L_{(j)}$ denotes the $j^{th}$ element of an ordered list $L$.

*<u>Execution completion rule</u>*: execution of a task(-interaction) $pin$ for request $r$ is <u>completed</u> by physical resource $pr$ at system time $t_S$, if and only if $Att\text{-}Serv(r, pin, pr, t_S) = U(r, pin, \{\underline{lr}\}, pr, t_S)$.

If execution of task $t$ for request $r$ is completed, then set $s^t_r$ is subtracted from state $RIS$ and with probability $Pr_k$, $\{(r,p) \mid p \in P_k\}$ is added to state $RIS$, where the output-specification of $M(t,r,\{pr\})$ equals

$\{(P_k, Pr_k) \mid N > k > 0, P_k \subseteq \{t\} \times \{\text{output}\} \times \text{Int}, \Sigma_k Pr_k = 1\}$. Also, the threads specified by $M(t,r,\{pr\}) = (.,(.,\{lr\}))$ are released for request $r$: $Threads(r) := Threads(r) / \{lr\}$. Further, if task $t$ for request $r$ is executed, $r \notin Mem(t)$ and the input-condition of $M(t,r,\{pr\})$ contains more than one element (i.e. $t$ is a join-or for $r$), then $r$ is added to $Mem(t)$. Finally, the status for each physical resource $pr \in \{pr\}$ is changed from $Status(pr) \in S$ to $O(s,t,r)$: $Status(pr) := O(s,t,r)$.

If execution of the first task-interaction step $(i,1)$ is completed, then element $(r, p_{out})$ is subtracted from state $RIS$ and element $(r,i,1)$ is added to state $RIS$ and the threads specified by $M((i,1),r,\{pr\}) = (.,(.,\{lr\}))$ are released: $Threads(r) := Threads(r) / \{lr\}$. For following task-interaction steps $1 < n < N$ similar rules hold: the request contends for the required threads for step $n$, once obtained the step is executed and $RIS := RIS - \{(r,i,n)\} + \{(r,i,n+1)\}$, $Threads(r) := Threads(r) / \{lr\}_n$, where $M((i,n),r,\{pr\}) = (.,(.,\{lr\}_n))$.

Once the execution of the $N^{\text{th}}$ step is completed, then request $r$ is <u>transferred</u> by task-interaction $i$. If the request $r$ is transferred, then element $(r,i,N)$ is subtracted from state $RIS$ and all elements $(r, p^i_l)$ are added to state $RIS$. Further, $Threads(r) := Threads(r) / \{lr\}_N$, where $M((i,N),r,\{pr\}) = (.,(.,\{lr\}_N))$.

---

- [2] Much 'wilder' request arrivals may be more realistic for distributed applications. For example, correlated subsequent request arrivals, or request arrival rates depending on past (response time) performance.
- [3] More complex thread assignment policies, for example, those that take request priorities into account, can also be included. Further, if the optional 'resource availability' attribute is applicable, then a thread may only be assigned if the thread is indeed available.
- [4] Note, that the effective resource utilization formula $U(r, pin, \{lr\}, pr, t_s)$ may depend on the status of $pr$: $Status(pr)$.

## Claims

1. Apparatus for predicting performance of a distributed system, said apparatus comprising:

   - an input module for receiving input of said distributed system, said input including at least a description of application processes;
   - a model builder for receiving said input from said input module, said model builder being arranged to translate said input into a layered mathematical model of said distributed system;

- an output module,

wherein one layer of said layered mathematical model is presented by transaction graphs specifying at least one of sequential and parallel transactions to be completed in order to deal with a request for an application process, and resources in other layers of said mathematical layered model are represented by queues.

2. Apparatus according to claim 1, wherein said apparatus comprises a performance calculation module, said performance calculation module being arranged to calculate performance metrics for said distributed system using said layered mathematical model.

3. Apparatus according to any of the preceding claims, wherein said layered mathematical model comprises an application layer, a logical resource layer and a physical resource layer.

4. Apparatus according to any of the preceding claims, wherein said transactions have transaction completion times which are dependent on logical resource completion times, said logical resource completion times being dependent on physical resource completion times.

5. Apparatus according to claim 3, wherein said logical resource layer defines required logical resources for execution of at least one of tasks and task interactions within an application process and resources that are released after said execution.

6. Apparatus according to any of claims 3, wherein said logical resource layer defines a predetermined order of usage of said required logical resources.

7. Apparatus according to any of claims 3, wherein said logical resource layer defines all application processes potentially contending for required logical resources.

8. Apparatus according to any of claims 3, wherein said logical resource layer defines availability of required logical resources for an application process by subtracting busy periods for other application processes from a total resource capacity.

9. Apparatus according to any of claims 3, wherein said physical resource layer defines current status of physical resources.

10. Apparatus according to any of the preceding claims, wherein said transaction graphs contain join-or and join-and constructs.

11. Apparatus according to any of claims 3, wherein said physical resource layer of said multi-layered mathematical model comprises an effective resource utility formula for specifying consumption of physical resources caused by a request, said formula comprising the following parameters:

- type of said request;
- tasks for dealing with said request;
- logical resources used for executing said tasks.

12. Apparatus according to claim 11, wherein said parameters have volumes that are either available from or can be derived from experiments.

13. Apparatus according to any of the preceding claims, wherein said apparatus comprises an evaluation module (705) which is arranged to compare said performance metrics with a required performance in order to decide if the required performance is met.

14. Apparatus according to any of the preceding claims, wherein said apparatus comprises a monitoring tool (806) arranged to:

- monitor relevant data of an operational distributed system;
- translate said relevant data into usage/traffic data;
- pass said usage/traffic data to said input module.

**15.** Apparatus according to claim 14, wherein said apparatus comprises a rule-based response module (807) arranged to:

- compare said performance metrics with a required performance in order to decide if the required performance is met;
- make adequate changes in the configuration of said distributed system, based on certain predefined rules, if said required performance is not met.

**16.** Apparatus according to any of the preceding claims, wherein said descriptive input also includes descriptions of logical resource level processes and of physical resource level processes, and descriptions of intralevel communication.

**17.** Use of an apparatus according to any of the preceding claims for predicting performance of a cash withdraw system.

**18.** Method for predicting performance of a distributed system comprising the steps of:

- receiving information on said distributed system, said input including at least a description of application processes;
- defining processing levels for said distributed system;
- converting said information into a layered mathematical model;

wherein said method also comprises the steps of:

- using transaction graphs for representing one layer of said layered mathematical model, said transaction graphs specifying at least one of sequential and parallel actions to be completed in order to deal with a request for an application process;
- using queues for for representing other layers of said multi-layered mathematical model.

**19.** Method according to claim 18, wherin said method comprises the step of calculating performance metrics of said distributed system using said layered mathematical model.

**20.** Method according to any of claims 18, wherein said layered mathematical model comprises an application layer, a logical resource layer and a physical resource layer.

**21.** Method according to any of claims 18, wherein said method comprises the steps of:

- monitoring relevant data of an operational distributed system;
- translating said relevant data into usage/traffic data;
- use said usage/traffic data for said calculation of said performance metrics.

**22.** Method according to any of claims 18, wherein said method comprises the steps of:

- comparing said calculated performance metrics to a given required performance;
- adjusting platform configurations based on predefined rules, if the required performance is not met.

**23.** Computer program product to be loaded by a computer, said computer program providing said computer with the capacity to perform the following steps:

- receiving information on said distributed system, said input including at least a description of application processes;
- defining processing levels for said distributed system;
- converting said information into a layered mathematical model;

wherein said method also comprises the steps of:

- using transaction graphs for representing one layer of said layered mathematical model, said transaction graphs specifying at least one of sequential and parallel actions to be completed in order to deal with a request for an application process;

- using queues for for representing other layers of said multi-layered mathematical model.

24. Data carrier provided with a computer program product according to claim 23.

# FIG. 1

```
        ┌──────────────┐     ┌──────────────┐     ┌──────────────┐
        │  insert pass │     │    choose    │     │   take out   │
──────▶ │     and      │───▶ │  transaction │───▶ │  money and   │ ──────▶
        │   pincode    │     │              │     │     pass     │
        └──────────────┘     └──────────────┘     └──────────────┘
```

## FIG. 2

# FIG. 3

## FIG. 4

Lock on account database

Bank Account SoftWare

Bank Communication Protocol

ATM Communication Protocol

ATM Client SoftWare

Interpay Communiction Protocol

Pin code verification Software

Bank accounts

Bank server

Transmission network

ATM server
I/O
cpu-1 memo
cpu-2 cache

Interpay server

Pin codes

# FIG. 5

# FIG. 6

transaction
flowcharts

usage/traffic                    physical
                                 resources

Input module                     — 601

Model Builder                    — 602

603— Perf. Calc. module

Output module
604—

performance prediction

— 600

# FIG. 7

performance requirements

usage/traffic

transaction flowcharts

physical resources

**701** — Input module

**702** — Model Builder

**703** — Perf. Calc. module

**704** — Output module

performance prediction

**705** — Evaluation module

performance OK, or problems

700

# FIG. 8

806 — monitoring tool

performance requirements
usage/traffic
transaction flowcharts
physical resources

801 — Input module

802 — Model Builder

803 — Perf. Calc. module

804 — Output module

performance prediction

807 — rule-based response module

800

| | **European Patent Office** | **EUROPEAN SEARCH REPORT** | **Application Number**<br>EP 02 07 8027 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | D.A. MENASCÉ ET AL: "Preserving QoS of E-commerce Sites Through Self-Tuning: A Performance Model Approach"<br>PROCEEDINGS OF EC'01,<br> 14 - 17 October 2001, pages 224-234,<br>XP002246942<br>Tampa, Florida, USA<br>* page 231, left-hand column, line 5 - page 232, left-hand column, line 15 *<br>* page 227, left-hand column, line 1 - page 228, right-hand column, line 18 *<br>* page 225, left-hand column, line 35 - right-hand column, line 60 *<br>* page 224, right-hand column, line 8 - page 225, left-hand column, line 15 *<br>* page 224, left-hand column, line 1 - line 16 *<br>--- | 1-24 | G06F17/10<br>G06F17/18<br>H04L12/24 |
| A | WO 01 39419 A (VERIZON LAB INC)<br>31 May 2001 (2001-05-31)<br>* page 7, line 10 - page 9, line 26 *<br>* page 5, line 18 - page 6, line 27 *<br>* page 2, line 17 - page 4, line 2 *<br>--- | 1-24 | |
| A | F. ANDOLFI ET AL : "Deriving Performance Models of Software Architectures from Message Sequence Charts"<br>PROCEEDINGS OF WOSP 2000,<br> 2000, pages 47-57, XP002246943<br>Ontario, Canada<br>* page 51, right-hand column, line 1 - line 59 *<br>* page 49, left-hand column, line 26 - page 50, left-hand column, line 37 *<br>* page 47, right-hand column, line 1 - page 48, left-hand column, line 32 *<br>* page 47, left-hand column, line 1 - line 31 *<br>---<br><div align="center">-/--</div> | 1-24 | TECHNICAL FIELDS SEARCHED (Int.Cl.7)<br><br>G06F<br>H04L |

The present search report has been drawn up for all claims

| Place of search | Date of completion of the search | Examiner |
|---|---|---|
| MUNICH | 9 July 2003 | Barba, M |

EPO FORM 1503 03.82 (P04C01)

EP 1 385 094 A1

**European Patent Office**

**EUROPEAN SEARCH REPORT**

Application Number

EP 02 07 8027

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 905 715 A (CORLEY STEPHEN LESLIE ET AL) 18 May 1999 (1999-05-18)<br>* column 1, line 1 - column 5, line 38 *<br>----- | 1-24 | |
| | | | **TECHNICAL FIELDS SEARCHED (Int.Cl.7)** |

The present search report has been drawn up for all claims

| Place of search | Date of completion of the search | Examiner |
|---|---|---|
| MUNICH | 9 July 2003 | Barba, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

38

**ANNEX TO THE EUROPEAN SEARCH REPORT
ON EUROPEAN PATENT APPLICATION NO.**

EP 02 07 8027

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2003

| Patent document cited in search report | | Publication date | Patent family member(s) | | Publication date |
|---|---|---|---|---|---|
| WO 0139419 | A | 31-05-2001 | AU | 1926801 A | 04-06-2001 |
| | | | WO | 0139419 A2 | 31-05-2001 |
| US 5905715 | A | 18-05-1999 | AU | 709932 B2 | 09-09-1999 |
| | | | AU | 3393595 A | 22-03-1996 |
| | | | CA | 2198885 A1 | 07-03-1996 |
| | | | DE | 69516010 D1 | 04-05-2000 |
| | | | DE | 69516010 T2 | 02-11-2000 |
| | | | EP | 0786187 A1 | 30-07-1997 |
| | | | FI | 970849 A | 25-04-1997 |
| | | | WO | 9607281 A1 | 07-03-1996 |
| | | | HK | 1001652 A1 | 08-12-2000 |
| | | | JP | 10504949 T | 12-05-1998 |
| | | | NO | 970943 A | 28-04-1997 |
| | | | NZ | 292213 A | 26-05-1997 |

EPO FORM P0459

For more details about this annex : see Official Journal of the European Patent Office, No. 12/82